# EUROPÄISCHE PATENTSCHRIFT

(11) **EP 1 047 524 B1**
(45) Veröffentlichungstag und Bekanntmachung des Hinweises auf die Patenterteilung: **11.02.2004**
(21) Anmeldenummer: 99952279.0
(22) Anmeldetag: 04.08.1999
(51) Int. Cl.: B23K 35/32, C04B 37/02, B23K 35/02

(54) **PASTE ZUM VERSCHWEISSEN VON KERAMIKEN MIT METALLEN UND VERFAHREN ZUR HERSTELLUNG EINER SCHWEISSVERBINDUNG**
PASTE FOR WELDING CERAMICS TO METALS AND METHOD FOR PRODUCING A WELDED JOINT
PATE POUR LE SOUDAGE DE CERAMIQUES AVEC DES METAUX, ET PROCEDE DE REALISATION D'UNE SOUDURE

(30) Priorität: 16.09.1998 DE 19842276
(43) Veröffentlichungstag der Anmeldung: 02.11.2000
(73) Patentinhaber: ROBERT BOSCH GMBH, 70442 Stuttgart (DE)
(72) Erfinder: DE LA PRIETA, Claudio, D-70569 Stuttgart (DE); GLANZ, Uwe, D-71679 Asperg (DE); SCHMIEDEL, Carmen, D-71672 Marbach am Neckar (DE); KITIRATSCHKY, Petra, D-71272 Renningen (DE); ZAPPEL, Bernhard, D-72669 Unterensingen (DE)
(86) Internationale Anmeldenummer: PCT/DE1999/002421
(87) Internationale Veröffentlichungsnummer: WO 2000/015384

(56) Entgegenhaltungen:
- EP-A- 0 453 858
- EP-A- 0 839 598
- GB-A- 1 017 487
- US-A- 3 929 491
- US-A- 4 037 773
- US-A- 4 409 135

## Beschreibung

### Stand der Technik

Die Erfindung betrifft eine Paste zum Verschweißen von keramischen Materialien mit metallischen Kontaktflächen oder Metallen nach der Gattung des Hauptanspruches, sowie ein Verfahren zur Herstellung einer Schweißverbindung zwischen keramischen Materialien und Metallen mit dieser Paste.

Eine solche Paste ist in GB 1 017 487 A offenbart und enthält ein hochschmelzendes Metall und ein Zusatzmaterial, welches im wesentlichen aus CaO oder aus einer Mischung aus CaO und Al₂O₃ und/oder SiO₂ besteht.

Es ist allgemein bekannt, daß metallische Anschlußkontakte auf Keramiksubstraten mittels Bond-, Schweiß- oder Lötverfahren realisiert werden können. Die bisher bekannten Kontaktierungen und Kontaktierungsverfahren sind jedoch nicht für hohe mechanische und thermische Belastungen geeignet, da die Haftung zwischen Anschlußkontakt und Keramiksubstrat vielfach unzureichend ist. In diesen Fällen wurden bisher Steckkontakte verwendet.

Aufgabe der vorliegenden Erfindung ist es daher, eine Paste und ein damit durchführbares Verfahren zum Verschweißen von metallischen Kontaktflächen oder Metallen mit keramischen Materialien zu entwickeln, wobei die Paste hohen thermischen und mechanischen Belastungen standhält, um so die Verwendung kostenintensiver Standardsteckkontakte zu vermeiden.

Vorteile der Erfindung

Die erfindungsgemäße Paste mit den kennzeichnenden Merkmalen des Hauptanspruchs und das damit durchgeführte Verfahren zur Verschweißung von metallischen Kontaktflächen mit keramischen Materialien hat gegenüber dem Stand der Technik den Vorteil, daß eine direkte Verschweißung von metallischen Kontaktflächen, wie beispielsweise Leadframe-Materialien, mit keramischen Standardmaterialien über eine Zwischenschicht aus der Paste ermöglicht wird, wobei die Verschweißung bei gleichzeitig guten elektrischen Eigenschaften hohen thermischen und mechanischen Belastungen standhält, so daß bisher verwendete Steckkontakte entfallen können. Damit wird auch eine erhebliche Kostenreduktion in der Fertigung erreicht.

Die erfindungsgemäße Paste ermöglicht somit in einfacher Weise beispielsweise eine elektrische Kontaktierung von Sensorelementen durch Schweißverfahren, wobei metallische Materialien auf Standardsubstrate geschweißt werden und die erfindungsgemäße Paste als Haftschicht wirkt. Die Temperaturbeständigkeit der Schweißverbindung ist bis mindestens 500°C gewährleistet.

Vorteilhafte Weiterbildungen der Erfindung ergeben sich aus den in den Unteransprüchen genannten Maßnahmen.

Aufgrund weiterer zugesetzter Pastenkomponenten wie einem Binder, einem Weichmacher, einem Lösungsmittel, einem Dispergiermittel und einem Thixotropiemittel läßt sich insbesondere die Verarbeitbarkeit der erfindungsgemäßen Paste hinsichtlich Viskosität und Handhabung sehr vorteilhaft beeinflussen, so daß sich diese beispielsweise auch als Druckpaste oder zum Auftrag mit Hilfe einer Rakel eignet und sich somit verfahrenstechnisch leicht in bestehende Fertigungstechniken integrieren läßt.

Vorteilhaft ist weiter, wenn vor dem Sintern von keramischem Material und Paste zusätzlich auf die auf das keramische Material aufgebrachte und insbesondere getrocknete Paste eine Platinleitpaste aufgedruckt wird. Damit kann die elektrische Leitfähigkeit der Schweißverbindung insbesondere bei niedrigen Edelmetallgehalten der erfindungsgemäßen Paste verbessert werden.

### Ausführungsbeispiele

Die erfindungsgemäße Paste enthält zumindest ein Edelmetall, mindestens eine Aluminiumverbindung, mindestens eine Siliziumverbindung, und mindestens eine Verbindung, ausgewählt aus der Gruppe der Bariumverbindungen, der Magnesiumverbindungen und der Calciumverbindungen. Darüberhinaus wird zur vereinfachten Handhabung und Herstellung der Paste in vorteilhafter Weiterbildung der Erfindung zusätzlich ein Binder, ein Weichmacher und ein Lösungsmittel zugegeben. Weiterhin wird bei Bedarf ein Thixotropiemittel und ein Dispergiermittel in die Paste eingearbeitet. Als Edelmetall eignet sich besonders Platin, Palladium, Silber oder Gold.

Als Bariumverbindung eignet sich insbesondere Bariumoxid, Bariumcarbonat, Bariumhydrat, Bariumacetat oder eine sonstige organische Bariumverbindung, wobei es sehr vorteilhaft ist, wenn sich die Bariumverbindung während eines nachfolgenden Trocknens und/oder Sinterns der erfindungsgemäßen Paste zusammen mit dem keramischen Material und der metallischen Kontaktfläche möglichst vollständig und rückstandsfrei in Bariumoxid zersetzt oder umwandelt. Besonders vorteilhaft ist auch die Zugabe von Bariumoxid als Bariumverbindung zu der erfindungsgemäßen Paste, da beispielsweise eine starke Gasentwicklung oder Freisetzung von Wasser nachteilig ist beim Verschweißen.

Die Bariumverbindung in der erfindungsgemäßen Paste kann ganz oder teilweise durch eine Magnesiumverbindung und/oder eine Calciumverbindung ersetzt sein, wozu sich insbesondere MgO, CaO, MgCO₃, CaCO₃, die Hydroxide von Calcium oder Magnesium sowie organische Magnesium- oder Calciumverbindungen eignen, da diese nach einem Trocknen und/oder Sintern, sehr vorteilhaft analog den Anforderungen an die Bariumverbindung, zumindest weitgehend als entsprechende Metalloxide vorliegen.

Als Siliziumverbindung eignet sich Siliziumdioxid, eine organische Siliziumverbindung oder eine Silizium-Sauerstoffverbindung, wobei es ebenfalls sehr vorteilhaft ist, wenn sich die Siliziumverbindung während eines nachfolgenden Trocknens oder Sinterns der erfindungsgemäßen Paste zusammen mit dem keramischen Material und der metallischen Kontaktfläche möglichst vollständig und rückstandsfrei in Siliziumdioxid zersetzt oder umwandelt. Besonders bevorzugt ist die Zugabe von Siliziumdioxid, Kaolin, Kaolinit oder Mg₂[SiO₄] (Forsterit) als Siliziumverbindung.

Als Aluminiumverbindung eignet sich Aluminiumoxid (Al₂O₃), eine organische Aluminiumverbindung wie Aluminiumformiat oder Aluminiumhydroxid (Al(OH)₃ oder AlO(OH)), wobei es auch hier, wie im Fall von Silizium und Barium, sehr vorteilhaft ist, wenn sich die Aluminiumverbindung während eines nachfolgenden Trocknens oder Sinterns der erfindungsgemäßen Paste zusammen mit dem keramischen Material und der metallischen Kontaktfläche möglichst vollständig und rückstandsfrei in Aluminiumoxid (Al₂O₃) zersetzt oder umwandelt. Besonders bevorzugt ist die direkte Zugabe von Aluminiumoxid (Al₂O₃) als Aluminiumverbindung.

Ganz besonders bevorzugt hinsichtlich Haftung, Wirtschaftlichkeit und einfacher Handhabung hat sich eine Paste unter Verwendung von Platin, Siliziumdioxid, Aluminiumdioxid und Bariumoxid herausgestellt.

Mögliche Zusammensetzungen der erfindungsgemäßen Paste sind in den Ausführungsbeispielen 1 bis 3 wiedergegeben. Die Verwendung der relativ geringen Mengen der Bariumverbindung wie Bariumoxid oder Bariumcarbonat, die durch ganz oder teilweise durch eine Calcium- oder Magnesium-Verbindung ersetzt sein kann, und der Siliziumverbindung wie Siliziumdioxid hat sich als ein wesentliches Merkmal der beanspruchten Erfindung herausgestellt.

### Beispiel 1:

60,8 Gew.-% Platin
16,7 Gew.-% Aluminiumoxid
0,4 Gew.-% Siliziumdioxid
1,6 Gew.-% Bariumoxid
zusätzlich werden zugesetzt:
4,0 Gew.-% Polyvinylbutyral als Binder
1,4 Gew.-% Dibutylphthalat als Weichmacher
15,1 Gew.-% Butylcarbitol als Lösungsmittel

### Beispiel 2:

60,7 Gew.-% Platin
15,2 Gew.-% Aluminiumoxid
0,5 Gew.-% Siliziumdioxid
0,9 Gew.-% Bariumcarbonat
zusätzlich werden zugesetzt:
4,3 Gew.-% Polyvinylbutyral als Binder
1,6 Gew.-% Diochtylphthalat als Weichmacher
16,8 Gew.-% Butylcarbitol als Lösungsmittel

### Beispiel 3:

38,2 Gew.-% Platin
39,7 Gew.-% Aluminiumoxid
1,2 Gew.-% Siliziumdioxid
0,4 Gew.-% Bariumoxid
zusätzlich werden zugesetzt:
4,0 Gew.-% Polyvinylbutyral als Binder
1,4 Gew.-% Dibutylphthalat als Weichmacher
15,1 Gew.-% Butylcarbitol als Lösungsmittel

Als Dispergiermittel zur Zugabe in die Pasten gemäß den Ausführungsbeispielen 1 bis 3 eignen sich je nach Lösungsmittel vielfältige an sich bekannte Netz- und Dispergiermittel. Insbesondere die Verwendung von Produkten unter den Handelsnamen Diperplast oder Disperbyk der Fa. BYK-Chemie GmbH, D-46462 Wesel, die bei Bedarf in einem Anteil von 0,2 bis 6 Gew.-% zugegeben werden können, hat sich als vorteilhaft erwiesen. Als Thixotropiemittel zur Zugabe in die Pasten gemäß den Ausführungsbeispielen 1 bis 3 eignet sich beispielsweise Polyvinylbutyral oder Ethylcellulose. Es kann in einer Menge von 0,5 bis 25 Gew.-% zugegeben werden.

Der Einsatz der Edelmetalle und der Aluminium-, Silizium- oder der Verbindung aus der Gruppe der Bariumverbindungen, Calciumverbindungen oder Magnesiumverbindungen erfolgt vorteilhaft in Form von sehr fein gemahlenen Pulvern, deren Korngrößen im Bereich von 0,1 µm bis 50 µm liegen.

Die spezifische Oberfläche der Edelmetallpulver liegt vorteilhaft zwischen 1 und 10 m²/g und die des Pulvers der Aluminiumverbindung vorteilhaft zwischen 5 und 15 m²/g. Besonders bevorzugt ist ein Platinpulver mit einer spezifischen Oberfläche von ca. 3 m²/g und ein Aluminiumoxidpulver (Al₂O₃) mit einer spezifischen Oberfläche von ca. 10 m²/g.

Alle Komponenten der Paste werden in an sich bekannter Weise vermischt und zu einer homogenen Masse verarbeitet. Diese wird dann auf das keramische Material, das mit der metallischen Kontaktfläche verschweißt werden soll, insbesondere durch Aufrakeln, Drucken oder Pinseln aufgetragen und bei Bedarf getrocknet.

Danach wird dann die metallische Kontaktfläche, beispielsweise in Form eines Leadframes oder einer dünnen Folie auf die getrocknete Paste aufgebracht und bei ca. 1500°C bis 1550°C im Cofiring-Verfahren zusammen mit dem keramischen Material und der getrockneten Paste gesintert. Auf die metallische Kontaktfläche kann dann in an sich bekannter Weise ein metallischer Kontakt geschweißt werden, wobei die Paste einerseits als Haftvermittler zwischen metallischer Kontaktfläche und keramischem Material wirkt, und andererseits zumindest bereichsweise als elektrisch leitende Zwischenschicht dient.

Alternativ kann nach Auftragen und Trocknen der zu einer homogenen Masse verarbeiteten Paste auf das keramische Material, auch zunächst ein Sintern des keramischen Materials mit der darauf befindlichen Paste erfolgen, wobei dieses Sintern wie vorstehend im Cofiring-Verfahren bei ca. 1500°C bis 1550°C erfolgt. Danach wird dann die metallische Kontaktfläche, beispielsweise in Form eines Leadframes oder einer dünnen metallischen Folie auf die mit dem keramischen Material versinterte Paste aufgebracht und in an sich bekannter Weise verschweißt, so daß ein metallischer Kontakt entsteht, wobei die Paste einerseits als Haftvermittler zwischen metallischer Kontaktfläche und keramischem Material wirkt, und andererseits zumindest bereichsweise als elektrisch leitende Zwischenschicht zwischen Metall und damit verschweißtem keramischen Material dient.

In einer Weiterbildung der beiden vorstehend beschriebenen Verfahren kann im übrigen vor dem Sintern und Verschweißen auf die auf das keramische Material aufgebrachte getrocknete Paste zunächst eine weiteren an sich bekannte Platinleitpaste aufgebracht. Beide Pasten werden dann bevorzugt erneut getrocknet, bevor wie in den beiden vorstehend beschriebenen Verfahrensvarianten weiterverfahren wird.

Die modifizierten Verfahren unter Verwendung der Platinleitpaste haben den Vorteil, daß mit einem niedrigeren Edelmetallanteil der erfindungsgemäßen Paste gearbeitet werden kann, ohne daß die elektrische Leitfähigkeit zwischen aufgeschweißtem Metall und keramischem Material verloren geht. Die Platinleitpaste dient somit zur Ausbildung einer elektrischen Leitschicht.

Als keramisches Material eignet sich insbesondere ein Substrat aus Aluminiumoxid, Siliziumcarbid oder Zirkondioxid.

## Patentansprüche

1. Paste zum Verschweißen von keramischen Materialien mit metallischen Kontaktflächen oder Metallen, wobei die Paste mindestens ein Edelmetall, mindestens eine Aluminiumverbindung, mindestens eine Siliziumverbindung und mindestens eine Verbindung ausgewählt aus der Gruppe der Bariumverbindungen, Calciumverbindungen und Magnesiumverbindungen enthält, wobei die Paste 5 bis 60 Gew.-% einer Aluminiumverbindung, 0,2 bis 5 Gew.-% einer Siliziumverbindung, 0,2 bis 5 Gew.-% einer Verbindung ausgewählt aus der Gruppe der Bariumverbindungen, Calciumverbindungen und Magnesiumverbindungen und 20 bis 80 Gew.-% Edelmetall enthält.

2. Paste nach Anspruch 1, **dadurch gekennzeichnet, dass** die Paste einen Binder, insbesondere Polyvinylbutyral enthält.

3. Paste nach Anspruch 1, **dadurch gekennzeichnet, dass** die Paste einen Weichmacher, insbesondere Dibutylphthalat oder Dioctylphthalat und/oder ein Lösungsmittel, insbesondere Butylcarbitol enthält.

4. Paste nach mindestens einem der Ansprüche 1 bis 3, **dadurch gekennzeichnet, dass** die Paste ein Dispergierungsmittel und/oder ein Thixotropiemittel, insbesondere Polyvinylbutyral oder Ethylcellulose enthält.

5. Paste nach Anspruch 4, **dadurch gekennzeichnet, dass** diese das Dispergierunsgmittel in einer Konzentration von 0,2 bis 6 Gew.-% und/oder das Thixotropiemittel in einer Konzentration von 0,5 bis 25 Gew.-% enthält.

6. Paste nach Anspruch 3, **dadurch gekennzeichnet, dass** diese das Lösungsmittel in einer Konzentration von 9 bis 30 Gew.-% enthält.

7. Paste nach Anspruch 3, **dadurch gekennzeichnet, dass** die Paste den Weichmacher in einer Konzentration von 0,3 bis 5 Gew.-% enthält.

8. Paste nach mindestens einem der vorangehenden Anspruche, **dadurch gekennzeichnet, dass** die Paste 1 bis 10 Gew.-% Binder enthält.

9. Paste nach Anspruch 1, **dadurch gekennzeichnet, dass** das Edelmetall, die Aluminiumverbindung, die Calciumverbindung und die Verbindung ausgewählt aus der Gruppe der Bariumverbindungen, Calciumverbindungen und Magnesiumverbindungen als sehr fein gemahlenes Pulver, insbesondere mit einer Korngröße von 0,1 µm bis 50 µm, eingebracht sind.

10. Paste nach Anspruch 1 oder 9, **dadurch gekennzeichnet, dass** die spezifische Oberfläche des Pulvers der Siliziumverbindung zwischen 5 und 15 m²/g liegt und die spezifische Oberfläche des Edelmetallpulvers zwischen 1 und 10 m²/g liegt.

11. Paste nach Anspruch 1, **dadurch gekennzeichnet, dass** das Edelmetall Platin ist.

12. Paste nach Anspruch 1, **dadurch gekennzeichnet, dass** die Bariumverbindung ein Bariumoxid, Bariumcarbonat, Bariumacetat, Bariumhydroxid oder eine organische Bariumverbindung ist.

13. Paste nach Anspruch 1, **dadurch gekennzeichnet, dass** die Calciumverbindung ein Calciumoxid, Calciumcarbonat, Calciumhydroxid oder eine organische Calciumverbindung ist.

14. Paste nach Anspruch 1, **dadurch gekennzeichnet, dass** die Magnesiumverbindung ein Magnesiumoxid, Magnesiumcarbonat, Magnesiumhydroxid oder eine organische Magnesiumverbindung ist.

15. Paste nach Anspruch 1, **dadurch gekennzeichnet, dass** die Aluminiumverbindung Al₂O₃, Al(OH)₃, AIOOH oder eine organische Aluminiumverbindung ist.

16. Paste nach Anspruch 1, **dadurch gekennzeichnet, dass** die Siliziumverbindung Siliziumdioxid, Kaolin, Kaolinit, Mg₂[SiO₄], eine organische Siliziumverbindung oder eine Silizium-Sauerstoff-Verbindung ist.

17. Verfahren zur Herstellung einer Schweißverbindung zwischen keramischen Materialien und Metallen oder metallischen Kontaktflächen mit einer Paste nach mindestens einem der vorangehenden Ansprüche, wobei die Paste auf das keramische Material aufgebracht und das keramische Material mit der Paste gesintert wird, **dadurch gekennzeichnet, dass** das Sintern bei Temperaturen von 1450°C bis 1600°C erfolgt, und dass nach dem Sintern auf das mit der Paste versehene keramische Material eine metallische Kontaktfläche, Metallfolie oder ein Metall geschweißt wird.

18. Verfahren nach Anspruch 17, **dadurch gekennzeichnet, dass** die Paste nach dem Aufbringen getrocknet wird.

19. Verfahren nach Anspruch 17, **dadurch gekennzeichnet, dass** die Paste auf das keramische Material aufgedruckt wird.

20. Verfahren nach mindestens einem der Ansprüche 17 bis 19, **dadurch gekennzeichnet, dass** nach dem Aufbringen der Paste eine Platinleitpaste zumindest bereichsweise auf die Paste aufgebracht, insbesondere aufgedruckt, wird.

21. Verfahren nach Anspruch 20, **dadurch gekennzeichnet, dass** das mit der Paste und der Platinleitpaste versehene keramische Material getrocknet und anschließend gesintert wird.

## Claims

1. Paste for welding ceramic materials to metallic contact surfaces or metals, the paste containing at least one precious metal, at least one aluminium compound, at least one silicon compound and at least one compound selected from the group consisting of barium compounds, calcium compounds and magnesium compounds, the paste containing 5 to 60% by weight of an aluminium compound, 0.2 to 5% by weight of a silicon compound, 0.2 to 5% by weight of a compound selected from the group consisting of barium compounds, calcium compounds and magnesium compounds and 20 to 80% by weight of precious metal.

2. Paste according to Claim 1, **characterized in that** the paste contains a binder, in particular polyvinyl butyral.

3. Paste according to Claim 1, **characterized in that** the paste contains a plasticizer, in particular dibutyl phthalate or dioctyl phthalate and/or a solvent, in particular butyl carbitol.

4. Paste according to at least one of Claims 1 to 3, **characterized in that** the paste contains a dispersant and/or a thixotropic agent, in particular polyvinyl butyral or ethylcellulose.

5. Paste according to Claim 4, **characterized in that** it contains the dispersant in a concentration of 0.2 to 6% by weight and/or the thixotropic agent in a concentration of 0.5 to 25% by weight.

6. Paste according to Claim 3, **characterized in that** it contains the solvent in a concentration of 9 to 30% by weight.

7. Paste according to Claim 3, **characterized in that** the paste contains the plasticizer in a concentration of 0.3 to 5% by weight.

8. Paste according to at least one of the preceding claims, **characterized in that** the paste contains 1 to 10% by weight of binder.

9. Paste according to Claim 1, **characterized in that** the precious metal, the aluminium compound, the calcium compound and the compound selected from the group consisting of barium compounds, calcium compounds and magnesium compounds are introduced as very finely milled powder, in particular with a grain size of 0.1µm to 50µm.

10. Paste according to Claim 1 or 9, **characterized in that** the specific surface area of the powder of the silicon compound is between 5 and 15 m²/g and the specific surface area of the precious metal powder is between 1 and 10 m²/g.

11. Paste according to Claim 1, **characterized in that** the precious metal is platinum.

12. Paste according to Claim 1, **characterized in that** the barium compound is a barium oxide, barium carbonate, barium acetate, barium hydroxide or an organic barium compound.

13. Paste according to Claim 1, **characterized in that** the calcium compound is a calcium oxide, calcium carbonate, calcium hydroxide or an organic calcium compound.

14. Paste according to Claim 1, **characterized in that** the magnesium compound is a magnesium oxide, magnesium carbonate, magnesium hydroxide or an organic magnesium compound.

15. Paste according to Claim 1, **characterized in that** the aluminium compound is Al₂O₃, Al(OH)₃, AlOOH or an organic aluminium compound.

16. Paste according to Claim 1, **characterized in that** the silicon compound is silica, kaolin, kaolinite, Mg₂[SiO₄], an organic silicon compound or a silicon-oxygen compound.

17. Method for producing a welded joint between ceramic materials and metals or metallic contact surfaces using a paste according to at least one of the preceding claims, in which the paste is applied to the ceramic material and the ceramic material is sintered to the paste, **characterized in that** the sintering operation takes place at temperatures of 1450ºC to 1600ºC, and **in that** after the sintering operation a metallic contact surface, metal foil or a metal is welded onto the ceramic material which has been provided with the paste.

18. Method according to Claim 17, **characterized in that** the paste is dried after it has been applied.

19. Method according to Claim 17, **characterized in that** the paste is printed onto the ceramic material.

20. Method according to at least one of Claims 17 to 19, **characterized in that** after the paste has been applied a conductive platinum paste is applied, in particular by printing, to at least areas of the paste.

21. Method according to Claim 20, **characterized in that** the ceramic material which has been provided with the paste and the conductive platinum paste is dried and then sintered.

## Revendications

1. Pâte à souder des matières céramiques avec des surfaces de contact métallique ou des métaux,
la pâte contenant au moins un métal noble, au moins un composé d'aluminium, au moins un composé de silicium et au moins un composé choisi dans le groupe des composés de baryum, de calcium et de magnésium,
la pâte contenant entre 5 et 60 % en poids d'un composé d'aluminium, de 0,2 à 5 % en poids d'un composé de silicium, de 0,2 à 5 % en poids d'un composé choisi dans le groupe des composés de baryum, de calcium et de magnésium et de 20 à 80 % en poids d'un métal noble.

2. Pâte selon la revendication 1,
**caractérisée en ce qu'**
elle contient un liant notamment du polyvinyle butyral.

3. Pâte selon la revendication 1,
**caractérisée en ce qu'**
elle contient un plastifiant notamment du dibutylphthalate ou du dioctylphthalate et/ou un solvant notamment du butylcarbitol.

4. Pâte selon l'une quelconque des revendications 1 à 3,
**caractérisée en ce que**
la pâte contient un agent dispersant et/ou un agent thixotropique notamment du polyvinyle butyral ou de l'éthyle cellulose.

5. Pâte selon la revendication 4,
**caractérisée en ce qu'**
elle contient une concentration de 0,2 à 6 % en poids d'un agent dispersant et/ou de 0,5 à 25 % en poids d'un agent thixotropique.

6. Pâte selon la revendication 3,
**caractérisée en ce qu'**
elle contient un solvant sur une concentration de 9 à 30 % en poids.

7. Pâte selon la revendication 3,
**caractérisée en ce que**
la pâte contient le plastifiant à une concentration de 0,3 à 5 % en poids.

8. Pâte selon l'une quelconque des revendications précédentes,
**caractérisée en ce qu'**
elle contient entre 1 et 10 % en poids d'un liant.

9. Pâte selon la revendication 1,
**caractérisée en ce qu'**
on introduit le métal noble, le composé d'aluminium, le composé de calcium et le composé choisi dans le groupe des composés de baryum, de calcium et de magnésium sous la forme d'une poudre finement broyée notamment avec une granulométrie de 0,1 µm à 50 µm.

10. Pâte selon l'une quelconque des revendications 1 ou 9,
**caractérisée en ce que**
la surface spécifique de la poudre du composé de silicium est comprise entre 5 et 15 m²/g et la surface spécifique de la poudre de métal noble est comprise entre 1 et 10 m²/g.

11. Pâte selon la revendication 1,
**caractérisée en ce que**
le métal noble est du platine.

12. Pâte selon la revendication 1,
**caractérisée en ce que**
le composé de baryum est un oxyde, carbonate, acétate ou hydroxyde de baryum ou encore un composé organique de baryum.

13. Pâte selon la revendication 1,
**caractérisée en ce que**
le composé de calcium est un oxyde, un carbonate, un hydroxyde de calcium ou un composé organique de calcium.

14. **°)** Pâte selon la revendication 1,
**caractérisée en ce que**
le composé de magnésium est un oxyde, carbonate, hydroxyde de magnésium ou un composé organique de magnésium.

15. Pâte selon la revendication 1,
**caractérisée en ce que**
le composé d'aluminium est Al₂O₃, AL(OH)₃, AlOOH ou un composé organique d'aluminium.

16. Pâte selon la revendication 1,
**caractérisée en ce que**
le composé de silicium est du dioxyde de silicium, du kaolin, de la kaolinite, Mg₂[SiO₄], un composé organique de silicium ou un composé oxygène-silicium.

17. Procédé de fabrication d'une liaison soudée entre une matière céramique et des métaux ou des surfaces de contact métallique à l'aide d'une pâte selon au moins l'une quelconque des revendications précédentes, la pâte étant appliquée sur la matière céramique qui est frittée avec la pâte,
**caractérisé en ce que**
le frittage est effectué à des températures comprises entre 1450°C jusqu'à 1600°C, et
après le frittage, on soude sur la matière céramique munie de la pâte, une surface de contact métallique, un film métallique ou un métal.

18. Procédé selon la revendication 17,
**caractérisé en ce qu'**
on sèche la pâte après son application.

19. Procédé selon la revendication 17,
**caractérisé en ce qu'**
on imprime la pâte sur la matière céramique.

20. Procédé selon l'une quelconque des revendications 17 à 19,
**caractérisé en ce qu'**
après application de la pâte on imprime au moins par zones une pâte conductrice de platine sur la pâte.

21. Procédé selon la revendication 20,
**caractérisé en ce qu'**
on sèche la matière céramique munie de la pâte ou de la pâte conductrice de platine et ensuite on la fritte.
